# FASCICULE DE BREVET EUROPEEN

(11) **EP 1 342 598 B1**
(45) Date de publication et mention de la délivrance du brevet: **08.11.2006**
(21) Numéro de dépôt: 03290460.9
(22) Date de dépôt: 27.02.2003
(51) Int. Cl.: B60H 1/00

(54) **Toit conditionneur d'air**
Dachklimaanlage
Roof air conditioner

(30) Priorité: 05.03.2002 FR 0202750
(43) Date de publication de la demande: 10.09.2003
(73) Titulaire: Société Nouvelle de Climatisation, 31270 Cugnaux (FR)
(72) Inventeur: Guittard, Jean-Marc, 81800 Rabastens (FR)
(74) Mandataire: Laget, Jean-Loup

(56) Documents cités:
- EP-A- 0 211 444
- FR-A- 2 465 606
- US-A- 4 581 988
- US-A- 4 641 502
- US-A- 6 161 609

## Description

La présente invention est relative à un dispositif de conditionnement de l'air (ventilation, filtration de l'air, chauffage et climatisation) de véhicules, notamment pour cabines de tracteurs et d'automoteurs agricoles, comme décrit dans le document US 4581988.

Il est courant depuis quelques années, de climatiser les cabines de tracteurs agricoles. Les constructeurs disposent les différents composants ou boîtiers renfermant les différents composants de la climatisation, à savoir ; échangeurs thermiques évaporateurs, chauffage et condenseur, filtres, ventilateurs et autres à des endroits différents, ce qui complique et alourdit la mise en place, l'entretien et le dépannage. De plus, les performances et le rendement de telles installations laissent souvent à désirer.

La présente invention concerne un ensemble unitaire réunissant en une seule structure monobloc, qui constitue le toit de la cabine, tous les composants d'un conditionneur d'air.

La présente invention comporte tout ou partie des dispositions suivantes :
a). La structure monobloc est un caisson constitué par une enveloppe supérieure, servant de toit de cabine et une enveloppe inférieure, servant d'habillage intérieur, entre lesquels sont disposés :
   - les moyens d'échanges thermiques chauffage et air conditionné,
   - les moyens de circulation de l'air dans la cabine,
   - les moyens de filtration de l'air.
b). Le caisson comporte :
   - en partie avant : des moyens de circulation de l'air dans la cabine,
   - en partie médiane : un volume de répartition de l'air se trouvant en amont des moyens de soufflage,
   - en partie arrière : d'une part un volume recevant l'air de re-circulation provenant de la cabine et l'air neuf provenant de (extérieur ; d'autre part, un volume dans lequel sont disposés la filtration poussière, l'échangeur thermique chauffage et air conditionné ainsi qu'un volume recevant l'échangeur thermique condenseur, ses moyens de ventilation et ses accessoires.
c). La partie inférieure arrière comporte un module additionnel dans lequel sont disposés les moyens optionnels de pressurisation et de filtration chimique.
d). Les deux enveloppes constituant l'ensemble monobloc dénommé caisson sont reliées l'une à l'autre par des attaches qui, d'une part, les assemblent d'une façon étanche et qui, d'autre part, permet la fixation de l'ensemble à la structure de la cabine.

A titre d'exemple non limitatif et pour faciliter la compréhension, on a représenté aux dessins annexés :
- **figure 1** : une vue de dessus et de trois quarts arrière d'un exemple de réalisation de l'invention,
- **figure 2** : une vue en couple longitudinale du dispositif de la figure 1,
- **figure 3** : une vue de dessus et de trois quarts avant du dispositif de la figure 2, l'enveloppe supérieure ayant été enlevée,
- **figure 4** : une vue de dessous et de trois quarts avant du dispositif de la figure 2.

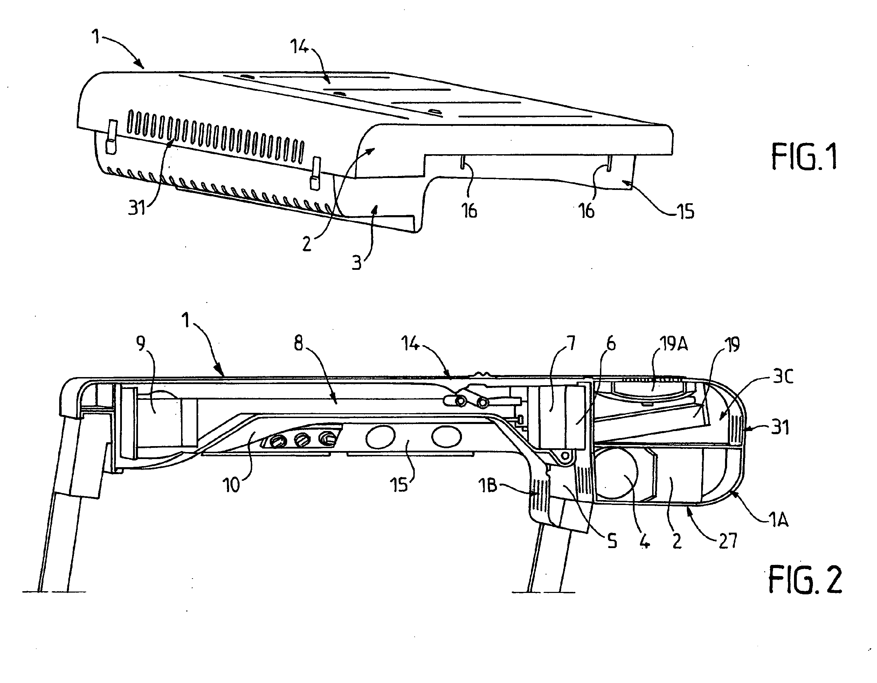

En se reportant à la figure 1, on voit que le dispositif selon l'invention est constitué par un caisson 1, lui-même constitué par une enveloppe supérieure 14 et une enveloppe inférieure 15, qui sont emboîtées l'une sur l'autre de façon étanche et sont maintenues assemblées par des attaches 16 disposées sur les côtés dudit caisson 1.

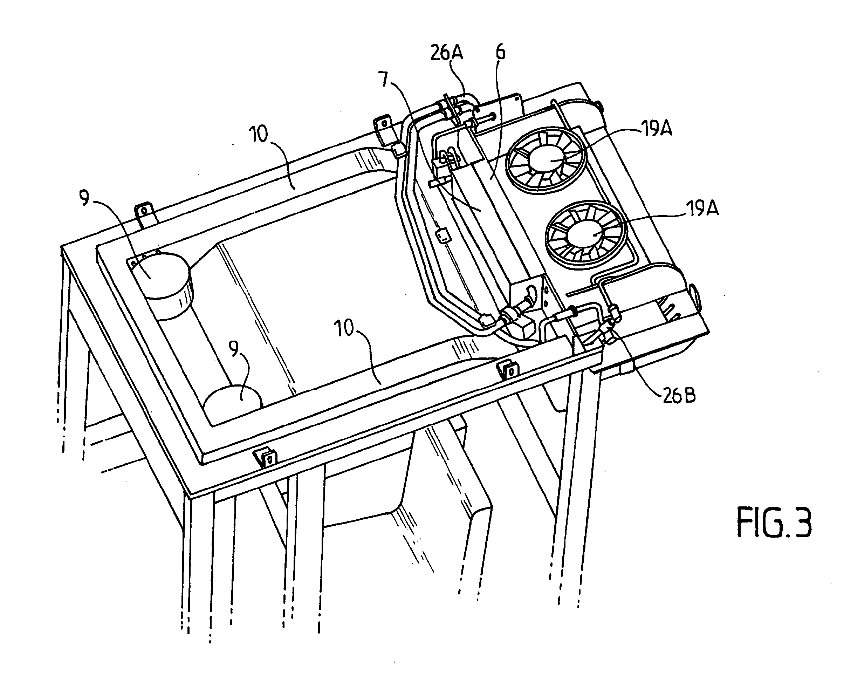

Sur les figures 2 et 3, on voit que les deux enveloppes 14 et 15 définissent une enceinte dans laquelle sont disposées : en partie avant des moyens de soufflage 9, en partie médiane, un volume ou chambre de tranquillisation 8 qui se trouve en amont des moyens de soufflage 9 et dans lequel lesdits moyens de soufflage 9 puisent l'air. Deux branches en U forment les conduits de distribution d'air 10 dans lesquels les moyens de soufflage 9 refoulent l'air puisé dans la chambre de tranquillisation 8.

Positionné en amont de la chambre de tranquillisation 8, l'échangeur thermique chauffage et air conditionné 7 est traversé par l'air préalablement filtré par le filtre à poussière 6 qui y est accolé, en provenance de la chambre d'admission d'air 5.

La chambre d'admission d'air 5 reçoit l'air neuf, provenant de l'extérieur au travers de l'orifice d'admission de l'air extérieur 1A et l'air recyclé provenant de la cabine au travers de l'orifice d'admission de l'air intérieur 1B.

On peut avantageusement disposer en amont du filtre 6, une plaque percée de trous répartis sur sa surface. Ces trous engendrent une perte de charge qui contribue à la bonne répartition de l'air sur toute la surface du bloc de filtration.

L'échangeur thermique chauffage et air conditionné 7 est relié au circuit de refroidissement du moteur de la machine par les canalisations d'alimentation chauffage 26A. Le circuit d'air conditionné est relié au compresseur, entraîné par le moteur de la machine (non représentée parce que ne faisant pas partie de l'invention), par connexion directe sur l'échangeur thermique condenseur 19, et sur l'échangeur thermique chauffage et air conditionné 7.

Au condenseur 19 sont associés, comme cela est usuel un ou plusieurs ventilateurs 19a.

Le condenseur 19 est disposé dans une chambre 30 située à l'arrière du caisson unitaire 1 formé par les enveloppes 14 et 15.

L'air destiné au condenseur 19 pénètre dans le volume 30 par des orifices 31 et est évacué par les ventilateurs 19a à travers des orifices ménagés dans l'enveloppe supérieure 2.

Comme cela est visible sur la figure 3, les canalisations d'alimentation chauffage 26A et les canalisations du système d'air conditionné 26B, reliées au compresseur, passent par les montants de la cabine, constitués en tube creux.

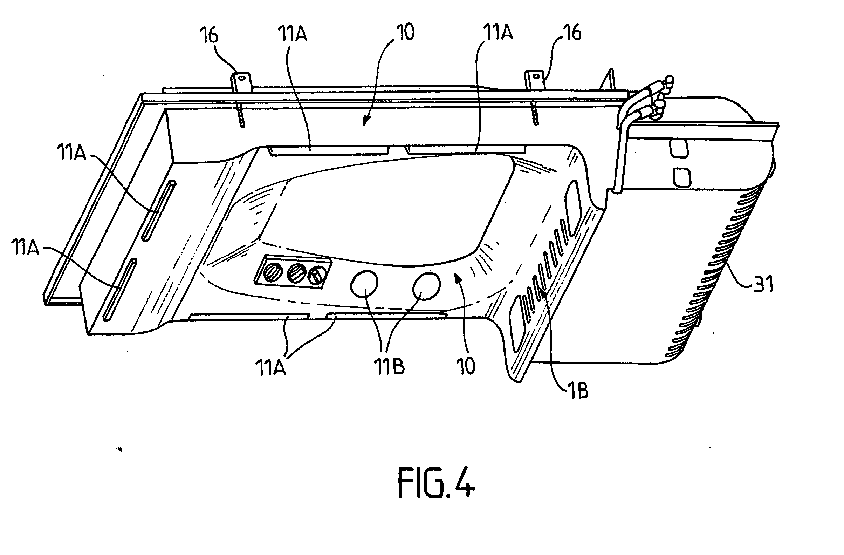

Sur la figure 4, on voit que les deux branches constituant les conduites de distribution d'air 10, alimentées par les moyens de soufflage 9, débouchent dans la cabine par des orifices de distribution oblongs 11A et par des orifices de diffusion orientables et obturables 11B.

Les orifices de distribution oblongs 11A, disposés tout autour de la cabine assurent le désembuage et le dégivrage des vitres latérales et du pare-brise et contribuent à l'homogénéité de la température de la cabine, par répartition de l'air de soufflage autour du volume du chauffeur et sur les parois de la cabine.

Des orifices de diffusion orientables et obturables 11B supplémentaires, servant d'appoint dans l'environnement de la tête du chauffeur, débouchent des conduites de distribution d'air 10.

Un module additionnel de pressurisation et de filtration 27 vient se monter en partie inférieure arrière du conditionneur de toit 13.

Ce module prend son air à l'extérieur de la cabine par l'orifice d'admission d'air 1A.

Avant d'être introduit dans la chambre d'admission d'air 5, par les moyens de pressurisation 4, l'air traverse le bloc de filtration chimique 2 situé en aval.

On voit que l'ensemble unitaire monobloc dénommé "toit conditionneur d'air" 13, comporte la totalité des moyens nécessaires au conditionnement d'air de la cabine en chaud, en froid, en filtration poussière et optionnellement chimique, en renouvellement d'air ainsi qu'en pressurisation, tout en constituant le toit extérieur et le plafond intérieur de la cabine.

Comme cela est visible sur les figures 3 et 4, les attaches 16 constituent les moyens de solidarisation des enveloppes supérieures 14 et inférieures 15 et de la cloison intermédiaire 17, tout en permettant de fixer facilement et solidement le toit conditionneur d'air 13 à la structure de la cabine.

Il ne reste plus alors qu'à connecter les canalisations d'alimentation chauffage 26A et les canalisations du système d'air conditionné 26B et la ligne d'alimentation électrique pour que le système soit opérationnel.

Du fait de l'intégration de tous les composants du système de conditionnement d'air, dans un compartiment unique et étanche, on obtient une bonne protection contre les risques de corrosion, un bon coefficient d'isolation, une optimisation de l'encombrement du système de conditionnement d'air, une bonne étanchéité à l'air extérieur et aux polluants circulants dans son environnement et une excellente répartition de l'air à une bonne homogénéité des températures en cabine.

De plus, tous les composants et toutes les fonctions du toit conditionneur d'air 13 sont testés en usine en conditions réelles de fonctionnement, assurant la fiabilité du système, ainsi que sa conformité aux dispositions légales.

A cela s'ajoutent :
- la rapidité et la facilité de montage et de mise en service pour le constructeur de la machine,
- l'accès rapide et direct aux principaux composants du système d'air conditionné par ouverture rapide du couvercle du condenseur et par dépose de l'enveloppe supérieure donnant accès aux moyens de soufflage.

La présente invention n'est pas limitée à l'emploi sur les cabines de tracteurs, d'automoteurs agricoles, mais peut être employée par tout habitacle susceptible de recevoir comme toit, un "toit conditionneur d'air".

## Revendications

1. Dispositif de climatisation pour habitacles de véhicules et notamment pour cabines de véhicules tels que des tracteurs ou engins de Travaux Publics le dispositif constituant un ensemble unitaire réunissant en une seule structure monobloc tous les composants d'une installation de climatisation, cette structure monobloc constituant un toit de la cabine du véhicule;
la structure monobloc étant un caisson (1) constitué par une enveloppe supérieure ou couvercle (2) ; une enveloppe inférieure ou fond (3) ; entre lesquels sont disposés : les moyens d'échanges thermiques (7) ; les moyens de re-circulation d'air dans la cabine comprenant : les moyens de reprise (13, 14), les moyens de filtration (14) et de réintroduction (10, 11, 12, 24, 25) de l'air de la cabine ; le condenseur (19) et ses moyens de ventilation (19a), **caractérisé par le fait que**
le caisson (1) comporte : en partie avant les moyens de soufflage (9) de l'air dans la cabine ; en partie médiane un volume de répartition de l'air (11), situé en amont des moyens de soufflage (9), ainsi que des conduites (10) de réintroduction de l'air, situés en aval desdits moyens de soufflage (9) ; et en partie arrière, d'une part un volume (13) de reprise de l'air de la cabine, un volume dans lequel sont disposés un filtre à poussière (5), ainsi qu'un échangeur thermique (15) et, d'autre part, un volume (16) dans lequel sont disposés le condenseur (15) et ses ventilateurs (15a).

2. Dispositif selon la revendication 1, dans lequel la partie arrière comporte, en outre, un volume additionnel (30) dans lequel sont disposés des moyens de pressurisation (32, 33).

3. Dispositif selon les revendications 1 ou 2, dans lequel les conduites d'alimentation (20, 21) pour le réchauffage de l'échangeur thermique (15) ainsi que les conduites (22, 23), provenant du compresseur, pour le refroidissement dudit échangeur thermique (15) au moyen du condenseur (17) sont placées à l'intérieur des montants en tubes creux (5, 6) de la structure de la cabine.

4. Dispositif selon la revendication 1, dans lequel les conduites de réintroduction de l'air dans la cabine sont en forme de U encadrant la chambre de tranquilisation (11) dans la partie médiane du caisson (1) ; les branches latérales (12) ainsi que la branche centrale du U étant munies d'orifices (24, 25) en forme de fentes placées le long des vitres pour assurer le désembuage de celles-ci.

5. Dispositif selon la revendication 4, dans lequel les deux branches latérales du U sont en outre munies d'orifices (26) de soufflage d'air avec bouches orientables.

6. Dispositif selon l'une quelconque des revendications précédentes, dans lequel les deux enveloppes inférieure (2) et supérieure (3) du caisson (1) sont assemblées l'une à l'autre de façon étanche par des attaches (4).

7. Dispositif selon la revendication 6, dans lequel les attaches (4) sont pourvues de moyens de fixation à la structure de la cabine.

## Claims

1. Air-conditioning device for vehicle passenger compartments and in particular for the cabins of vehicles such as tractors or Public Works machines, the said device constituting a unitary assembly which combines all the components of an air-conditioning installation in a single monoblock structure, the said monoblock structure constituting the roof of the vehicle cabin;
the monoblock structure being a box (1) that consists of an upper envelope or lid (2); a lower envelope or base (3); between which are arranged: heat exchange means (7); means for recirculating air in the cabin, comprising: return means (13, 14), filtering means (14) and re-introduction means(10, 11, 12, 24, 25) for the cabin air; the condenser (19) and its ventilation means (19a), **characterised by** the fact that:
the box (1) comprises: in the front portion, means (9) for blowing air into the cabin; in the middle portion, an air distribution space (11) located upstream from the blowing means (9) and ducts (10) for re-introducing air located downstream from the said blowing means (9); and in the rear portion, on the one hand a space (13) for the return of air from the cabin and a space in which are arranged a dust filter (5) and a heat exchanger (15), and on the other hand a space (16) in which are arranged the condenser (19) and its ventilators (19a).

2. Device according to Claim 1, in which the rear portion also comprises an additional space (30) in which pressurisation means (32, 33) are arranged.

3. Device according to Claims 1 or 2, in which the feed ducts (20, 21) for the heating of the heat exchanger (15) and the ducts (22, 23) coming from the compressor for cooling the said heat exchanger (15) by means of the condenser (17) are located on the inside of hollow tubular uprights (5, 6) of the structure of the cabin.

4. Device according to Claim 1, in which the ducts for re-introducing air into the cabin are in the shape of a U which surrounds the air quietening chamber (11) in the middle portion of the box (1); the lateral branches (12) and the central branch of the U being provided with orifices (24, 25) in the shape of slots located along panels in order to ensure that the latter remain unclogged.

5. Device according to Claim 4, in which the two lateral arms of the U are also provided with air-blowing orifices (26) with outlets that can be orientated.

6. Device according to any of the preceding claims, in which the two, lower (2) and upper (3) envelopes of the box (1) are assembled to one another in a leakproof manner by fasteners (4).

7. Device according to Claim 6, in which the fasteners (4) are provided with means for fixing to the structure of the cabin.

## Patentansprüche

1. Klimatisierungsvorrichtung für Fahrgasträume von Fahrzeugen und insbesondere für Kabinen von Fahrzeugen, wie Traktoren oder Tiefbaumaschinen, wobei die Vorrichtung eine einheitliche Anordnung bildet, die in einer einzigen, einstückigen Struktur alle Bauteile einer Klimaanlage vereint, und wobei diese einstückige Struktur ein Dach der Fahrzeugkabine bildet,
wobei die einstückige Struktur ein Behälter (1) ist, der durch eine obere Verkleidung oder einen Deckel (2) und eine untere Verkleidung oder einen Boden (3) gebildet ist, zwischen denen angeordnet sind: die Wärmetauschmittel (7), die Mittel zum Umwälzen von Luft in der Kabine, die umfassen: die Wiederaufnahmemittel (13, 14), die Mittel (14) zum Filtern und (10, 11, 12, 24, 25) zum Wiedereinführen von Kabinenluft, sowie ein Kondensator (19) und dessen Ventilationsmittel (19a), **dadurch gekennzeichnet, daß** der Behälter (1) folgendes umfaßt:
im vorderen Teil Mittel (9) zum Einblasen von Luft in die Kabine, im mittleren Teil ein stromaufwärts der Einblasmittel (9) angeordnetes Luftverteilungsvolumen (11) sowie stromabwärts der Einblasmittel (9) angeordnete Leitungen (10) zum Wiedereinführen von Luft und im hinteren Teil einerseits ein Volumen (13) zur Wiederaufnahme von Luft aus der Kabine, ein Volumen, in dem ein Staubfilter (5) sowie ein Wärmetauscher (15) angeordnet sind, und andererseits ein Volumen (16), in dem der Kondensator (15) und seine Ventilatoren (15a) angeordnet sind.

2. Vorrichtung nach Anspruch 1, bei der der hintere Teil ferner ein zusätzliches Volumen (30) umfaßt, in dem Mittel zur Druckerzeugung (32, 33) angeordnet sind.

3. Vorrichtung nach den Ansprüchen 1 oder 2, bei der die Versorgungsleitungen (20, 21) zum Beheizen des Wärmetauschers (15) sowie die Leitungen (22, 23), die vom Kompressor kommen, zum Kühlen des Wärmetauschers (15) mittels des Kondensators (17) im Inneren der als Hohlrohre (5, 6) ausgebildeten Stützen des Kabinenaufbaus angeordnet sind.

4. Vorrichtung nach Anspruch 1, bei der die Leitungen zum Wiedereinführen der Luft in die Kabine in Form eines U vorliegen, das die Ruhekammer (11) im mittleren Teil des Behälters (1) einfaßt, wobei die seitlichen Schenkel (12) sowie der mittlere Schenkel des U mit Öffnungen (24, 25) in Form von Schlitzen versehen sind, die entlang den Scheiben angeordnet sind, um sicherzustellen, daß diese nicht beschlagen.

5. Vorrichtung nach Anspruch 4, bei der die beiden seitlichen Schenkel des U ferner mit Lufteinblasöffnungen (26) mit ausrichtbaren Klappen versehen sind.

6. Vorrichtung nach einem der vorhergehenden Ansprüche, bei der die untere Verkleidung (2) und die obere Verkleidung (3) des Behälters (1) beide mittels Befestigungen (4) dichtend zusammengebaut sind.

7. Vorrichtung nach Anspruch 6, bei der die Befestigungen (4) mit Mitteln zur Befestigung am Kabinenaufbau versehen sind.
